# EUROPEAN PATENT SPECIFICATION

(11) **EP 2 136 227 B1**
(45) Date of publication and mention of the grant of the patent: **19.08.2015**
(21) Application number: 09162999.8
(22) Date of filing: 17.06.2009
(51) Int. Cl.: G02B 6/02

(54) **High temperature stable fiber grating sensor and method for producing same**
Hoch temperaturbeständiger Fasergittersensor und Verfahren zu dessen Herstellung
Capteur à fibre comprenant un réseau stable aux hautes températures et son procédé de fabrication

(30) Priority: 18.06.2008 US 73560 P; 09.07.2008 US 169920
(43) Date of publication of application: 23.12.2009
(73) Proprietor: National Research Council of Canada, Ottawa, Ontario K1A 0R6 (CA)
(72) Inventor: Smelser, Christopher W., Ottawa Ontario K2P 0J3 (CA); Mihailov, Stephen J., Kanata Ontario K2T 1H3 (CA); Grobnic, Dan, Ottawa Ontario K2E 5S6 (CA); Lu, Ping, Ottawa Ontario K2W 1E4 (CA); Walker, Robert B., Spencerville Ontario K0E 1X0 (CA); Cuglietta, Gino, Kanata Ontario K2L 4E2 (CA); Ding, Huimin, Nepean Ontario K2G 6B9 (CA); Dai, Xiaoli, Ottawa Ontario K2V 1B1 (CA)
(74) Representative: McKechnie, Neil Henry

(56) References cited:
- EP-A1- 1 400 819
- C. W. SMELSER, D. GROBNIC, S.J. MIHAILOV: "Fabrication of femtosecond laser induced Bragg gratings in amorphous and crystalline dielectric waveguides" SPIE, PO BOX 10 BELLINGHAM WA 98227-0010 USA, vol. 6796, 2007, pages 67961E-1-67961E-14, XP040249605
- CHUN ZHAN ET AL: "Fabricating harsh environment fiber Bragg gratings by ultrafast laser" SPIE, PO BOX 10 BELLINGHAM WA 98227-0010 USA, vol. 6314, 2006, pages 63141Q1-63141Q11, XP040228924
- M. ASLUND, J. CANNING: "Annealing properties of gratings written into UV-presensitized hydrogen-outdiffused optical fiber" OPTICS LETTERS, vol. 20, no. 10, 15 May 2000 (2000-05-15), pages 692-694, XP002547548
- C.W. SMELSER ET AL: "Formation of Type I-IR and Type II-IR gratings with an ultrafast IR laser and a phase mask" OPTICS EXPRESS, vol. 13, no. 14, 11 July 2005 (2005-07-11) , pages 5377-5386, XP002547549
- DAN GROBNIC; STEPHEN J MIHAILOV; CHRISTOPHER W SMELSER; ROGERIO T RAMOS: "Ultrafast IR Laser Writing of Strong Bragg Gratings Through the Coating of High Ge-Doped Optical Fibers" IEEE PHOTONICS TECHNOLOGY LETTERS, IEEE SERVICE CENTER, PISCATAWAY, NJ, US, vol. 19, no. 12, 15 June 2008 (2008-06-15) , pages 973-975, XP011214864 ISSN: 1041-1135

## Description

### Field of the Invention

The present invention relates to a sensing apparatus and method for measurement of pressure, strain, temperature, or displacement or index of refraction of a high temperature environment and more particularly to a fiber Bragg grating sensor inscribed therein capable of measuring temperature, strains, and environment at temperatures up to 1000 °C.

### Background of the Invention

Fiber Bragg grating sensors (FBG sensors) have demonstrated themselves to be attractive devices for sensing temperature and strain along an optical fiber. Variations in the spectral response of the grating result from period changes in the Bragg grating due to strains or temperature variations that are experienced by the in-situ optical fiber. These FBG sensors offer important advantages over other sensor technologies because of their electrically passive operation, electromagnetic interference (EMI) immunity, high sensitivity and multiplexing capabilities. Fiber Bragg gratings are simple, intrinsic sensing elements which traditionally have been UV photo-inscribed into photosensitive Ge-doped silica fiber. Each FBG sensor has a characteristic retro-reflective Bragg resonance or Bragg wavelength, which is dependent upon the periodicity of the grating photo-inscribed within the fiber and the effective refractive index difference in the grating regions of the optical fiber. The FBG sensors can then easily be multiplexed in a serial fashion along a length of single fiber. When embedded into composite materials, By continuing the exposure and grating inscription of the fiber in the type I regime such that the index modulation becomes about >3×10⁻³, the threshold for type II grating formation is reduced in a continuous fashion until it traverses the grating inscription intensity, which in this instance was ∼1.5×10¹³ W/cm². The index modulation value is likely directly inversely proportional to the type II threshold intensity value.

Optical fibers with an array of FBG sensors allow for distributed measurements of load, strain, temperature and vibration of the material creating what has is commonly referred to as "smart structures" where the health and integrity of the structure is monitored on a real-time basis.

Typically fiber Bragg gratings are generated by exposing the UV-photosensitive core of a germanium doped silica core optical fiber to a spatially modulated UV laser beam in order to create permanent refractive index changes in the fiber core. Such a spatially modulated UV beam can be created by using a two-beam interference technique as disclosed in US patent number 4,807,950 by Glenn et al. or by using a phase mask as disclosed in US patent number 5,367,588 by Hill et al. The techniques taught by Glenn and Hill result in gratings that are typically referred to as Type I gratings.

A limitation of the prior-art UV-induced Type I fiber Bragg gratings, especially for high temperature sensor applications is that operation of the sensor at elevated temperatures results in the erasure or annealing of the UV-induced color centers and densification which are responsible for the induced index change of the grating. In fact, at temperatures approaching the glass transition temperature of the fiber, which for silica is approximately 1000 °C, total erasure of the induced index modulation results. The fiber also is modified at such high temperatures making it brittle with diffusion of the core material into the cladding. The fiber can easily be deformed by its own weight.

Another method for creating permanent photoretractive index changes in glasses employs the use of intense UV beams with fluences or energy/unit-area per laser pulse densities that approach those required to produce macroscopic damage of the glass. Askins et al. in US patent number 5,400,422 teach a method for producing permanent photoretractive index changes in the photosensitive cores of Ge-doped optical fibers with single high intensity UV laser pulses. Such Bragg gratings resulting from macroscopic damage to the glass optical fiber are typically referred to as Type II gratings. The high intensity portions of the interference fringes created by two crossed UV beams split from a single UV beam create localized damage at the core-cladding interface within the fiber. Because the process for inducing index change is one of structural change due to localized physical damage to the glass, rather than due to UV photoinduced color center formation, the induced index change is more robust and does not decrease with elevated temperature. In fact Askins et al. disclose that gratings produced in this way cannot be removed by annealing until the fiber or waveguide approaches the material's glass transition temperature. The drawback of this approach for induction of index change is that the Bragg gratings produced in this fashion have relatively low refractive index modulations (Δn =10⁻⁴) and are mechanically weak since the effective refractive index change results from periodic localized damage at the core-cladding interface. When the pulse duration is long (> a few tens of picoseconds) laser-excited electrons can transfer energy to the surrounding lattice faster than the thermal diffusion of the material can remove the energy resulting in damage. If the laser pulse continues to feed energy into the damage site, the damage can propagate beyond the irradiated zone. For damage grating structures written with long laser pulse durations greater than a few tens of picoseconds, the spectral quality of the resulting Bragg grating is often poor.

Another method for creating permanent photoretractive index changes in optical fiber employs the use of the process of "hydrogen-loading," as taught by Atkins et al. in US. Pat. No. 5,287,427, combined with UV-laser exposure of optical fiber that is manufactured with a core that is co-doped with fluorine. Subsequent to the UV exposure the fiber then undergoes a thermal post treatment at 1000 °C in order to induce a chemical composition grating as taught by Fokine in US. Pat. No. 6,334,018. As with the technique taught by Askins et al., the technique taught by Fokine also has the drawback that the induced index change of the Bragg gratings produced in this fashion have relatively low refractive index modulations (Δn =10⁻⁴).

The fabrication of high temperature stable Bragg gratings using infrared ultrafast radiation and a phase mask, as taught by Mihailov et al in US. Pat. No. 6,993,221 results in high temperature stable Bragg gratings with very high index modulations (Δn Δn >10⁻³). As shown by Smelser et al. Opt. Express., vol. 13, pp. 5377-5386, 2005, laser beam intensities greater than 4×10¹³ *W*/*cm*² at the surface of the optical fiber result in the formation of thermally stable Bragg gratings similar to Type II UV-induced gratings, but with much higher index modulations. Another document by Smelser et. al. describing the formation of Bragg gratings using femtosecond pulses can be found in Proceedings of SPIE Vol. 6796, pp. 67961E-1 - 67961E-13, 2007.

In the case of gratings fabricated using the techniques taught in US. Pat. No. 6,993,221, the index modulation results from a threshold type process of multiphoton absorption/ionization that results in plasma formation and the possible creation of microvoids. Although strong gratings can be formed using the approach taught in US. Pat. No. 6,993,221, the resulting gratings suffer from high scattering loss making it difficult to concatenate a large number of Bragg grating sensors into a sensor array on a single length of optical fiber. The threshold nature of the process also makes it more difficult to tailor the induced index profile of the grating in terms of its apodization, reflectivity and reflection bandwidth. Using the technique taught by Mihailov et al in US Pat. No. 7,031,571, Smelser et al. showed that very high index modulations (Δn >10⁻³) could be created with laser beam intensities lower than 4 × 10¹³ W/cm² that did not possess high scattering loss however these gratings were not high temperature stable and the index modulation likely arising from color center formation and material densification, erased at temperatures > 800 °C.

The inventors have recently discovered that induction of extremely large index modulations (Δn > 3x10⁻³) in Germanium doped telecommunication optical fiber using the technique disclosed by Smelser et al. in Opt. Letters., vol. 29, pp. 2127-2129, 2004 has the beneficial effect of being stable up to 1000 °C.

The thermal stability of the refractive index change that is generated using prolonged laser exposures consistent with a type I grating formation process may be caused by the extremely large index modulations that are generated. In one aspect of the present invention the inventors arrive at these high levels of index modulation for example 3x10⁻³, through the process of hydrogen loading of Ge-doped silica fibers coupled with femtosecond infrared laser exposure through a phase mask.

In accordance with another aspect of the invention, an extremely high index modulation such as 3x10⁻³ can be generated by femtosecond infrared laser exposure consistent with type I grating formation in optical fibers or waveguides which have high concentrations of core co-doping with for example Germanium. In Grobnic et al Photon. Technol. Lett. vol. 20, no. 12, pp. 973-975, 2008, high NA, high Ge-doped core fibers are more photosensitive to femtosecond IR radiation than standard telecom (low Ge-core concentration) fibers. It is possible that large index changes induced in the high Ge-doped fibers have improved thermal stability. We believe that such high refractive index changes for example 3x10⁻³ lower the intensity threshold sufficiently to yield a stable grating with minimal scatter.

It is an object of this invention to overcome the aforementioned limitations within the prior art systems for fabrication of high temperature FBG sensors by inducing large refractive index modulations in silica-based optical fibers that are relatively stable up to 1000 °C and which do not suffer from high scattering or insertion loss and.

### Summary of the Invention

In accordance with this invention a method is provided as defined in claim 1. Further details of the present invention are defined by dependent claims 2-12.

In accordance with an aspect of this invention a method of writing a grating in a doped glass is provided wherein the non-linear absorption to IR irradiation is increased by hydrogen or deuterium loading of the doped glass prior to irradiating with infrared light having an intensity of at least 10⁹ W/cm² and less than 10¹³ W/cm², and wherein the hydrogen or deuterium loading of the doped glass lowers the intensity threshold of the glass. Preferably the glass is Ge doped. Aside from enhanced photosensitivity of Ge-doped silica caused by hydrogen loading, other dopant materials used for waveguides in silica that are photosensitive to UV exposure also benefit from improved photosensitivity by hydrogen loading. These include co-doping of Ge with Boron (B) or Tin (Sn). Other dopants that exhibit enhanced photosensitivity, exclusive of Ge, when hydrogen loaded are phosphorous (P₂O₅), silicon oxynitride (SiON or nitrogen doped), aluminosilicate (Al₂O₃) and aluminosilicate codoped with terbium (Tb³⁺:Al₂O₃), or cerium (Ce⁺³:Al₂O₃), or erbium (Er⁺³:Al₂O₃) or ytterbium (Yb⁺³:Al₂O₃) or Europium (Eu²⁺) or Tantalum (TaO₅) or Thulium. It is believed that the photosensitivity to high intensity ultrafast IR radiation of these dopants, or combination thereof, would be enhanced through hydrogen or deuterium loading.

In accordance with an another aspect of this invention the photosensitivity of said optical waveguide is arrived at through high concentrations of core dopants such as Germanium, but in the absence of hydrogen or deuterium loading.

### Brief Description of Drawings

Exemplary embodiments of the invention will now be shown in conjunction with the drawings in which:
Fig. 1 (a) shows the output of an amplified ultrafast laser being focused through a silica phase mask onto the core of an optical fiber.
Fig. 1 (b) shows the diffracted phase mask orders combining to produce an interference pattern that is then inscribed into the photosensitive material.
Fig. 2 shows the evolution of the transmission loss at the Bragg wavelength (1550 nm) and the wavelength shift for a grating fabricated in hydrogen loaded SMF-28 fiber with a 4.28 mm pitch phase mask. The total wavelength shift is ∼1.8 nm, corresponding to a peak induced index change of ∼4×10⁻³.
Fig. 3 shows the grating spectra that result from the fabrication of a low Δn (<1×10⁻³) and high Δn (>3×10⁻³) ultrafast infrared induced fiber Bragg grating in hydrogen loaded SMF-28 fiber with a 4.28 mm pitch phase mask.
Fig. 4 shows the isochronal annealing curves of 2 sets of 3 gratings. Each grating was annealed in steps of ∼150 °C per hour starting at -25 °C or room temperature. The set of 3 high Δn gratings retain in excess of 60 % of their initial peak index change at 1000 °C while the low Δn are completely annealed out below 900 °C.
Fig. 5 shows the isochronal annealing curve and wavelength shift for a grating that has been preannealed at a temperature of 1000 °C. Clearly there is no additional degradation in the induced index change and the wavelength shift is nearly linear with a slope of ∼15 pm/°C. There was no hysteresis in the initial wavelength after the grating was cooled back down to room temperature.
Fig. 6 is a plot of number of pulses versus grating strength indicating the evolution of the grating strength comparing a high energy type II grating versus writing a type I followed by what we believe is a type II grating but having less damage than a standard type II grating.
Fig. 7 is a graph indicating the spectral characteristics of a type II grating.
Fig. 8 is a graphs of temperature versus refractive index and shows the evolution of the grating refractive index after one hour at room temperature and 1000 °C.

### Detailed Description of the Invention

Germanium doped silica based optical devices, specifically those formed in optical fiber, are an attractive medium for high temperature sensing applications (<1100 °C). Fiber Bragg gratings are an attractive sensing device as the wavelength of the Bragg resonance is temperature and strain dependent.

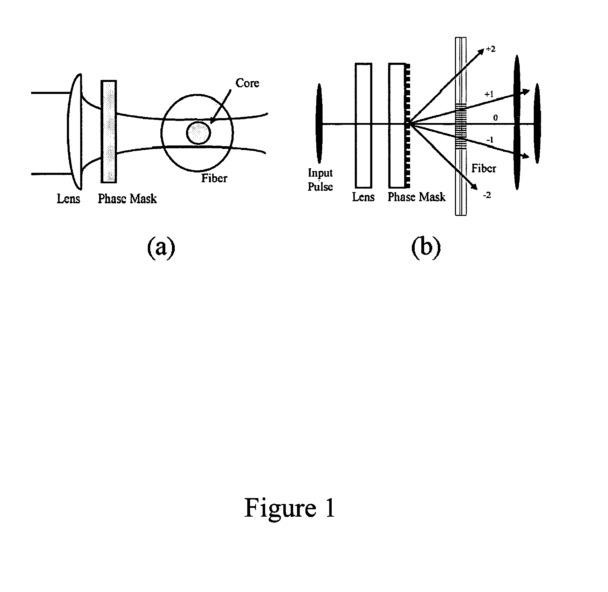

The fabrication of phase mask assisted ultrafast infrared induced fiber Bragg gratings is described in US Patent number 7,031,571 by Mihailov et al., incorporated herein by reference. Ge-doped *Corning* SMF-28 fiber was loaded with molecular hydrogen at a pressure of 2600 psi and a temperature of 23 °C for 14 days and kept at -40 °C until it was exposed. Fiber Bragg gratings were then inscribed by focusing the output of an amplified Ti:Sapphire femtosecond 800 nm laser through a silica phase mask onto a fiber sample, as shown in Fig. 1a where the laser beam 100 is focused through lens 102 onto a phase mask 104. The output light from the phase mask 104 is then focused on the core 108 of the optical fiber 110.

In the writing of a Bragg grating the repetition rate of the laser was set at 100 Hz with a temporal pulse length of 125 fs. The focal length of the lens was 30 mm and the pitch of the phase mask was 4.28 µm. The fiber was positioned 3 mm beyond the phase mask in order to ensure that, due to phase mask order walk-off, only a pure two-beam interference pattern was inscribed in the fiber, as shown in Fig. 1 (b). The incident laser pulse energy for all the gratings was set at 450 µJ, resulting in a peak interference field intensity of ∼1.5x10¹³ W/cm², which is below the threshold intensity required to produce a grating in unloaded SMF-28 fiber as shown in Smelser et al. Opt. Exress., vol. 13, pp. 5377-5386, 2005. The incident laser beam had a lie intensity spot radius of∼3.2 mm. For a 30 mm focal length lens the resulting free space focal spot would be -5 µm x 6.4 mm. As the 5 µm focus is less than the -8 µm diameter of the fiber core, the beam is scanned vertically with a piezo-actuated stage ±15 µm with a total sweep period of 20 s. The evolution of the transmission loss of the gratings at 1550 nm was recorded continuously with a broadband erbium source and a spectrum analyzer.

For non-H₂-loaded low Ge-doped standard telecom fiber, the characteristic intensity threshold for Type II grating formation was shown by Smelser et al. Opt. Express., vol. 13, pp. 5377-5386, 2005 to be 4×10¹³W/cm². This characteristic intensity threshold is dependent upon the characteristics of the waveguide and every waveguide has an inherent characteristic intensity threshold. It has been demonstrated in Smelser et al. Opt. Letters., vol. 29, pp. 2127-2129, 2004 that fiber Bragg gratings formed using ultrafast lasers below the aforementioned Type II grating threshold intensity in both hydrogen loaded and unloaded Ge-doped telecommunications fiber are not stable at temperatures exceeding 800 °C when the initial induced peak index modulation is less than 1×10⁻³. This type of fiber grating formation has been referred to as the Type I ultrafast IR induced regime. The low temperature stability of this type of index change is clearly demonstrated in Smelser et al. Opt. Letters., vol. 29, pp. 2127-2129, 2004 and by Smelser et al. Opt. Express., vol. 13, pp. 5377-5386, 2005.

Phase masks with pitches that are integer multiples of the smallest pitch required to produce a resonance at 1550 nm in Ge-doped silica (1.07 mm) can easily be used to fabricate gratings with ultrafast laser sources. The modulation profile of the induced index change that results from ultrafast grating fabrication is not a pure sinusoid, where UV induced index change is initially sinusoidal, and will produce higher order resonances without the need for saturation of the induced index change. For larger phase mask pitches the magnitude of the resonance at 1550 nm is smaller than the it would be for a 1.07 mm pitch mask due to a smaller Fourier component corresponding to that Bragg resonance (Smelser et al. Opt. Letters., vol. 32, 1453-1455, 2007). For high order phase masks, such as those with pitches of 3.21, 4.28, 5.35 mm's and higher, a very large index change will be induced in the medium before a significant resonance is observed at ∼ 1550 nm.
The peak induced index change for a fiber grating is most reliably determined by the magnitude of the shift of the wavelength of the Bragg resonance as the grating is formed. The wavelength shift during the formation of the grating is an indicator of the contribution of the induced index change to the effective index of the core mode of the fiber. The evolution of the Fourier components of ultrafast induced gratings, as shown in Smelser et al. J. Opt. Soc. Am. B., vol. 25, pp. 877-883 (2008), suggests that a total wavelength shift of ∼2.5 nm corresponds to a total peak induced index change of ∼ 5×10⁻³ .

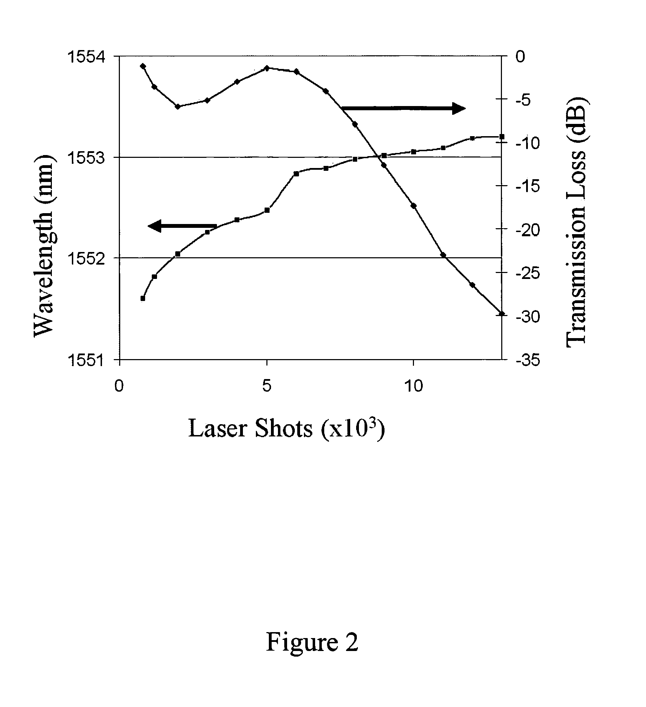

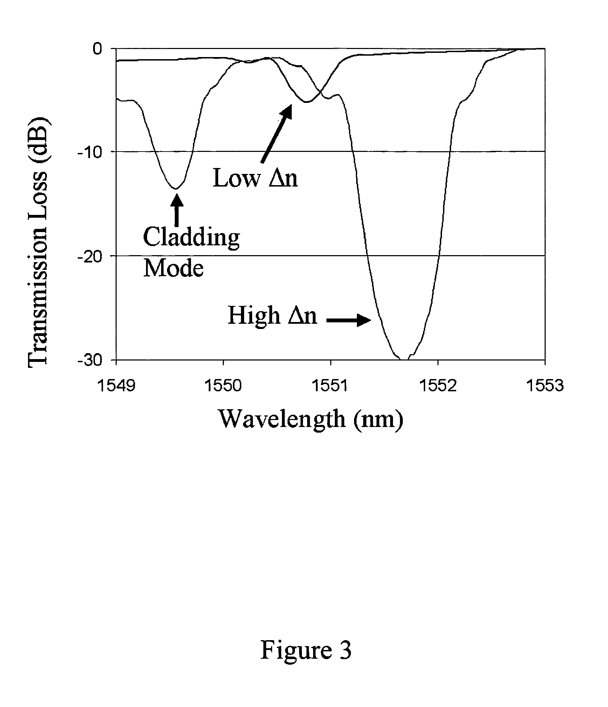

The spectral evolution of a grating written with a 4.28 mm pitch phase mask and the corresponding wavelength shift in Hydrogen loaded SMF-28 fiber is shown in Fig. 2. The loss at ∼1550 nm increases until it reaches a turning point, after which it appears to be arrested and begins to disappear. As the irradiation continues the loss reappears and eventually grows until it approaches 30 dB or higher. The peak loss shifts to a longer wavelength for the entire duration of the grating growth. The grating spectra for gratings fabricated with a transmission loss of 5 dB and 30 dB are shown in Fig. 3. The wavelength shift for the 30 dB grating is ∼1.8 nm. This would correspond to a peak index change of ∼4×10⁻³.

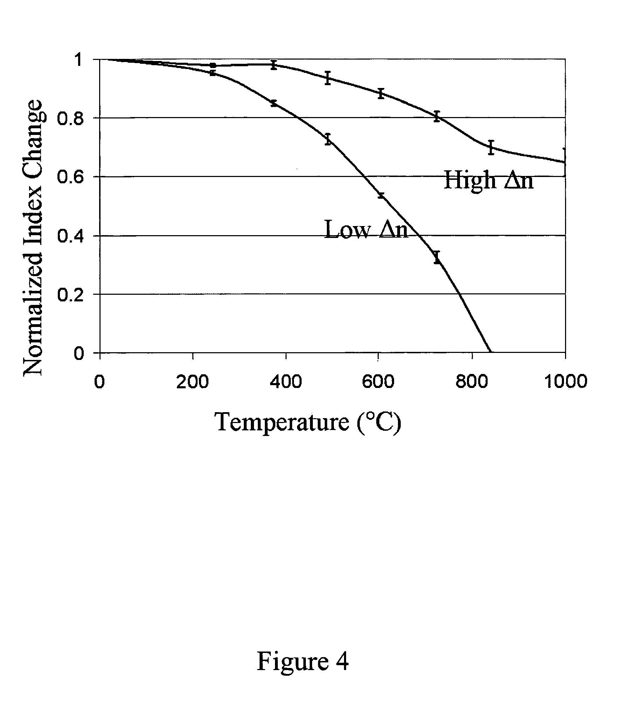

The average isochronal annealing curves of a set of 3 small (<1×10⁻³) and a set of 3 large (>3×10⁻³) peak index change gratings are compared in Fig. 4. The error bars represent the standard deviation from the mean. The gratings have been annealed in steps of 150 °C from room temperature up to 1000 °C with the grating resting at each temperature for one hour. The gratings that have been formed with large index change retain a large amount (in excess of 60 %) of their initial induced index change for temperatures at temperatures of 1000 °C. Further exposure of the high index change grating to temperatures of 1000 °C for 100 hours resulted in no further reduction of index modulation. The small index change gratings are clearly completely annealed out at a temperature of ∼850 °C. By continuing the exposure and grating inscription of the fiber in the type I regime such that the index modulation becomes greater or equal to about 3×10⁻³, the threshold for type II grating formation is reduced in a continuous fashion until it traverses the grating inscription intensity, which in this instance was ~1.5×10¹³ W/cm². We believe that the index modulation value is directly inversely proportional to the type II threshold intensity value.

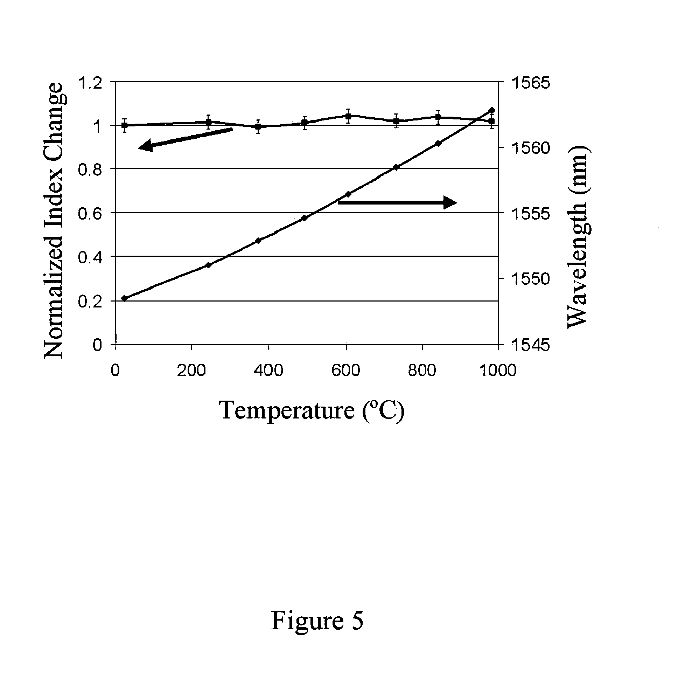

The temperature dependent wavelength shift and normalized refractive index change for a large Δn grating formed with a 4.28 µm phase mask in hydrogen loaded SMF-28 fiber after it has been pre-annealed at a temperature of 1000 °C for 100 hours is shown in Fig. 5. There is no further diminishment of the peak index change and the wavelength shift is nearly linear with a slope of ∼15 pm/°C. No hysteresis in the initial wavelength at room temperature is observed after cycling.

The use of a higher order grating is advantageous as large peak index changes, corresponding with high temperature stability, can be induced in the medium before a large resonance is observed at 1550 nm. This is, however, not a necessary requirement, as large index changes induced with lower order masks should also exhibit heightened temperature stability.

In accordance with this invention, the high temperature stable grating sensor made with prolonged exposures of hydrogen loaded fiber is different from our previous disclosures in that previous high temperature stable gratings for sensors required exposures with intensities that resulted in standard type II structures (multiphoton ionization, void formation, etc.

With the technique disclosed here of using 'low intensities' as defined in our hydrogen loading patent US 7, 515,792, a thermally stable type I structure is created. However previously, lower values of index change that produced the gratings in the type I regime were not thermally stable and erased at higher temperatures. However, in accordance with this invention, by prolonging the low intensity exposure such that a very large index change is induced in the fibre (> 0.005), the majority of the index change is stable at 1000 °C.

A disadvantage of a standard type II process absent hydrogen or deuterium loading for producing high temperature stable grating sensors is that because the induced index change is generated through an all or nothing type of threshold process, it is more difficult to tailor the induced index profile of the grating (apodization, amount of reflectivity etc). With a couple of dozen pulses from the laser, very high index modulations are created that are thermally stable but sometimes difficult to finely control grating reflectivity and bandwidth. Disadvantageously the type II structures result in scattering or insertion loss (∼20 % per device), which makes concatenation of several of these devices in a sensor array not practicable. With a type I process, where a similar thermal stability is achieved but with 15,000 pulses, better control of the filter spectrum is possible. It is our understanding that the insertion loss of the thermally stable type I grating is similar to that of a standard type I grating so potentially hundreds of thermally stable type I gratings could be concatenated into a sensor array.

Advantageously, hydrogen or deuterium loading of the waveguide allows one to write what we believe to be a type II grating in a type I regime where more control is achieved by lowering the characteristic intensity threshold of the waveguide or fiber. Furthermore, prolonged writing provides a large refractive index difference of about 3x10⁻³ which unexpectedly provides a grating that remains stable at 1000 °C so that at least 60% of the grating remains.

We have also discovered, in an alternative embodiment of this invention, that it possible to reduce the threshold intensity required to write a grating that will have desired characteristics of lower scattering than a standard type II grating would have, and permanence so that at least 60% of the grating is not erased when exposed to temperatures up to 1000 °C for long periods of time. As with the previously described examples, this embodiment although not requiring exposure to hydrogen or deuterium also requires a step of lowering the characteristic intensity threshold of the waveguide by at least 25% before irradiating the waveguide with femtosecond pulses of light.

While there are presently a number of techniques to fabricate high temperature FBGs, such as type IIA, FBGs in nitrogen doped silica fiber, and low reflectivity chemical composition gratings, we have noticed that only the Type II and chemical composition FBGs display stability at 1000 °C. However, standard type II Bragg gratings are basically damage gratings resulting from the interaction of high-energy radiation with the silica host. Initially type II FBGs were made with high intensity single UV pulses resulting in gratings with low spectral quality.

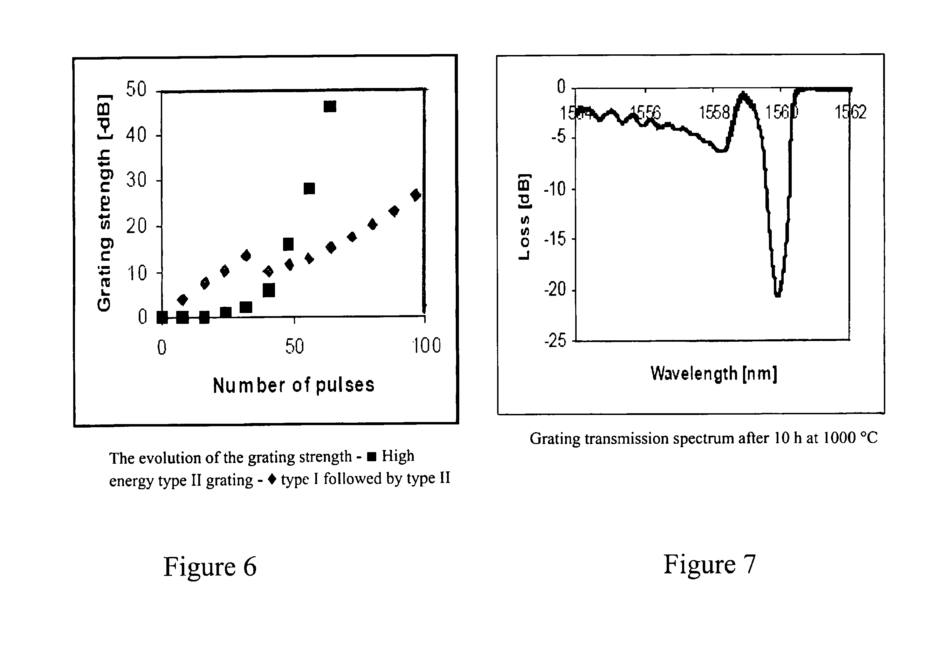

Recently high quality multiple-pulse type II gratings were inscribed in the core and cladding of different optical fibers with femtosecond infrared (IR) pulsed radiation using the phase mask method. In the case of type II gratings made with ultrafast radiation and a phase mask, the gratings are not pre-treated or pre-conditioned during fabrication to lower the threshold intensity and are fabricated by placing the fiber close to the phase mask so that the multiple beam interference will generate the high intensity pattern required. The resulting refractive index growth, as denoted by the increase of the strength of the Bragg resonance with the number of laser pulses, is complex and very rapid. This is shown in Fig. 6. After an initial exposure period with little or no growth in grating reflectivity, the spectral response grows very rapidly as compared to the growth of a type I grating. This growth pattern makes the control of the grating strength relatively difficult.

In accordance with this invention a new writing process for type II FBG structures is provided, wherein initially a defect/compaction related type I grating structure is written in the fiber core, followed by a writing process characteristic of type II gratings. Advantageously the resulting grating has the thermal characteristics of a type II grating but is written at lower energy densities than the normal type II femtosecond gratings and is of better spectral quality. In an alternative embodiment this method is also useful for writing gratings into any region of an optical waveguide such as the cladding and is not only limited to writing within the core region.

### Experiment and Results

FBGs were written using a regeneratively amplified 800-nm ultrafast Ti:sapphire (*Spectra Physics-Spitfire*) laser operating in a femtosecond regime. The laser beam was focused through a 30 mm focal length cylindrical lens and a zero-order-nulled silica phase mask with 2.14 µm pitch into the core of SMF28 fiber. According to the Gaussian beam approximation the focal spot width was computed to be ∼10 µm with a length of 6.4 mm. The beam was scanned across the waveguide by dithering the focusing lens with 20 µm amplitude at 0.05-Hz frequency. The FBGs were monitored during the inscription time using an ANDO spectrum analyzer and a broadband source. The Type I grating is written first by positioning the fiber 2 mm behind the phase mask to ensure that the interference pattern generated by the phase mask was due to only the ±1 diffracted orders and the exposure was made with 1 mJ energy pulses at a repetition rate of 100 Hz. After the type I grating is written, the beam is blocked and the fiber moved closer to the phase mask at a position of approximately 500 µm behind the phase mask so that the multiple beam interference pattern will supply the high radiation intensity required for writing type II grating structures. The fiber and the lens are then re-aligned. The energy of the ultrafast pulses is set to 750 µJ and the laser repetition rate to 5 Hz. During the type II grating inscription, only a small erasure of the type I grating is observed. The type II structures continue to grow as can be seen in Fig. 6. The period of the type II grating is the same as the mask while the period of the type I grating is half the period of the mask

Prewriting the fiber with a Type I grating in the manner described preconditions the fiber so that the threshold intensity of the waveguide is lowered preferably by at least 25%. The steps of prewriting the fiber with a Type I grating are disclosed in U.S. patent 7,031,571 incorporated herein by reference.

The spectral characteristics of this type II grating are shown in Fig. 7 and are similar to those of type II gratings inscribed directly into the fiber with high energy, for example the high cladding mode. The broadband loss for high-energy type II gratings can range from 1 to 5 dB. In the case of the low energy type II grating, the broadband loss is below 0.5 dB for a large index modulation and the strength of the grating is easier to control since the grating growth is less rapid.

For high-energy type II gratings without the pre-existence of a type I structure, absorption of the radiation in the fiber is initially very low and increases along with the growth of the type II grating. It is likely then that the formation of the type II grating is helping to couple radiation into the fiber. This can also explain the initial requirement for high intensity radiation. When the type I grating pre-exists in the fiber, coupling of subsequent radiation facilitates type II grating growth at lower intensities and at a slower pace. The experiment was repeated using a high Germania doped fiber. In this instance it was possible to write type II gratings with less than 500 µJ/pulses.

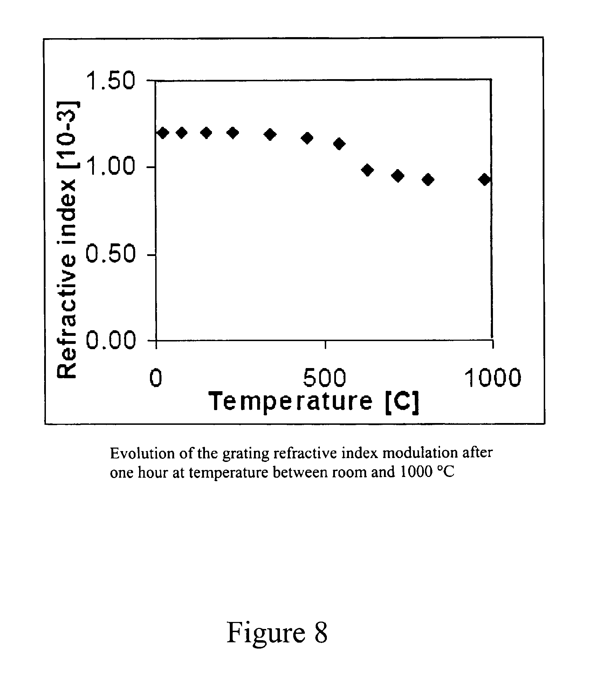

In order to evaluate the stability of the refractive index generated in the writing process described above, the grating was annealed in a micro-oven at temperatures up to 1000 °C for 1 hour at each temperature. The results are presented in Fig 8. Up to approximately 400 °C, there is no degradation of the grating. Between 400-700 °C, the grating looses a small amount of strength probably due to erasure of the initial type I grating and then shows high thermal stability up to 1000 °C. The grating was further annealed at 1000 °C for 10 hours and showed no significant degradation and at least 60% of the grating remained.

In summary, there are at least two ways in which the characteristic intensity of an optical fiber can be lowered: by hydrogen or deuterium loading prior at writing a grating with femtosecond pulses or by prewriting a grating in the optical fiber as is described above. By performing this lowering of the intensity threshold a substantially permanent grating with little scatter results.

## Claims

1. A method of producing a thermally stable grating comprising the sequential steps of:
a) providing an optical waveguide having a characteristic intensity threshold; wherein the characteristic intensity threshold is an intensity of light required to write a type II grating in said optical waveguide;
b) lowering the characteristic intensity threshold of the waveguide by at least 25% by hydrogen or deuterium loading the optical waveguide before writing the grating or alternatively by pre-writing the waveguide with a Type-I grating before writing the desired grating.
c) irradiating the waveguide with infrared femtosecond pulses of light having a sufficient intensity and for a sufficient duration to obtain a type II grating having a peak index modulation wherein said intensity of the femtosecond pulses of light are at least 25% less than characteristic intensity threshold required to write a type II grating, and wherein the intensity and duration are sufficient such that 60% of the grating peak index modulation remains after exposures of at least 10 hours at a temperature of 1000 °C.

2. A method as defined in claim 1, wherein the sufficient intensity is at least 10¹¹ W/cm² and, wherein at least 60% of the grating remains after exposures of at least 10 hours at a temperature of at least 1000 °C.

3. A method as defined in claim 2, wherein the sufficient intensity is at least 7x10¹² W/cm².

4. The method as defined in claim 2, wherein the grating is written in the core of the optical waveguide and wherein the grating is a Bragg grating.

5. A method of claim 4 , wherein the grating has a refractive index difference between adjacent high and low refractive index regions within the glass of at least 3 x 10⁻³.

6. A method of claim 4, wherein the waveguide is an optical fiber having at least a region therein about the grating that is doped.

7. A method of claim 6, wherein the grating is doped with Germania.

8. The method of claim 1, wherein the step of prewriting the first Type-1 grating includes the steps of:
disposing a phase mask adjacent to the waveguide; and, irradiating surface of a phase mask with electromagnetic radiation having a predetermined wavelength range and having a pulse duration of less than or equal to 100 picoseconds, wherein the mask is disposed to permit a portion of the electromagnetic radiation to interact with the mask and be incident on the waveguide, the interaction of the electromagnetic radiation with the mask for producing a plurality of diffracted orders greater than two, wherein at least one of the diffracted orders is a pair, the interaction of the electromagnetic radiation with the mask for producing a spatial intensity modulation pattern within the waveguide, the electromagnetic radiation incident on the waveguide being sufficiently intense to cause a change in an index of refraction of the waveguide, wherein the step of disposing a mask to be used as an interferometer includes the steps of disposing and orienting the mask adjacent to the waveguide at least a distance "d" such that group velocity walk-off results in pure two-beam interference within the waveguide wherein the distance "d" is chosen such that the difference in times of arrival of the order pairs due to group velocity walk-off results in the pure two-beam interference pattern of sub-beams of said pulse of light that have passed through the mask.

9. The method of claim 8 , wherein the period of the Type-1 grating is approximately half the period of the phase mask used to inscribe the grating which is approximately half the period of the grating written in step (c) claim 1.

10. A method wherein a plurality of gratings are formed within the waveguide of claim 4 using the method of claim 4.

11. A method wherein a plurality of gratings are formed within plural waveguides using the method of claim 4 and wherein said waveguides are concatenated to form a sensor array.

12. A method as defined in claim 4 or11 , wherein the loss associated with the thermally stable Bragg grating is less than 1.0 dB.

## Patentansprüche

1. Verfahren zum Erzeugen eines temperaturstabilen Gitters, umfassend die folgenden sequentiellen Schritte:
a) Bereitstellen eines Lichtwellenleiters mit einem kennzeichnenden Intensitätsschwellenwert; wobei der kennzeichnende Intensitätsschwellenwert eine Intensität des Lichts ist, die erforderlich ist, um ein Typ-II-Gitter in den Lichtwellenleiter einzuschreiben;
b) Reduzieren des kennzeichnenden Intensitätsschwellenwerts des Lichtwellenleiters um wenigstens 25% durch Füllen des Lichtwellenleiters vor dem Einschreiben des Gitters mit Wasserstoff oder Deuterium oder alternativ durch Vorabeinschreiben des Wellenleiters mit einem Typ-I-Gitter vor dem Einschreiben des gewünschten Gitters;
c) Bestrahlen des Wellenleiters mit Infrarot-Femtosekunden-Lichtimpulsen mit einer ausreichenden Intensität und über eine ausreichende Dauer, um ein Typ-II-Gitter mit einer Spitzenindexmodulation zu erhalten, wobei die Intensität der Femtosekunden-Lichtimpulse um wenigstens 25% niedriger ist als der kennzeichnende Intensitätsschwellenwert, der zum Einschreiben des Typ-II-Gitters erforderlich ist, und wobei die Intensität und die Dauer ausreichend sind, so dass 60% der Spitzenindexmodulation des Gitters nach einer Exposition von wenigstens 10 Stunden bei einer Temperatur von 1000 °C erhalten bleiben.

2. Verfahren nach Anspruch 1, wobei die ausreichende Intensität wenigstens 10¹¹ W/cm² beträgt, und wobei wenigstens 60% des Gitters nach einer Exposition über wenigstens 10 Stunden bei einer Temperatur von wenigstens 1000 °C verbleiben.

3. Verfahren nach Anspruch 2, wobei die ausreichende Intensität wenigstens 7x10¹² W/cm² beträgt.

4. Verfahren nach Anspruch 2, wobei das Gitter in den Kern des Lichtwellenleiters eingeschrieben wird, und wobei das Gitter ein Bragg-Gitter ist.

5. Verfahren nach Anspruch 4, wobei das Gitter eine Brechungsindexdifferenz zwischen benachbarten Regionen mit hohem und mit niedrigem Brechungsindex in dem Glas von wenigstens 3 x 10⁻³ aufweist.

6. Verfahren nach Anspruch 4, wobei der Wellenleiter eine optische Faser ist, mit wenigstens einer Region darin um das dotierte Gitter.

7. Verfahren nach Anspruch 6, wobei das Gitter mit Germanium dotiert ist.

8. Verfahren nach Anspruch 1, wobei der Schritt des Voreinschreibens des ersten Typ-I-Gitters die folgenden Schritte aufweist:
Anordnen einer Phasenmaske angrenzend an den Wellenleiter; und Bestrahlen der Oberfläche einer Phasenmaske mit elektromagnetischer Strahlung mit einem vorbestimmten Wellenlängenbereich und mit einer Impulsdauer von weniger oder gleich 100 Pikosekunden, wobei die Maske so angeordnet ist, dass sie es ermöglicht, dass ein Teil der elektromagnetischen Strahlung mit der Maske interagiert und auf den Wellenleiter einfällt, wobei die Interaktion der elektromagnetischen Strahlung mit der Maske eine Mehrzahl von Beugungsordnungen erzeugt, die größer sind als zwei, wobei wenigstens eine der Beugungsordnungen ein Paar ist, wobei die Interaktion der elektromagnetischen Strahlung mit der Maske in dem Wellenleiter ein räumliches Intensitätsmodulationsmuster erzeugt, wobei die auf dem Wellenleiter einfallende elektromagnetische Strahlung ausreichend intensiv ist, um eine Veränderung in einem Brechungsindex des Wellenleiters zu bewirken, wobei der Schritt des Anordnens einer Maske zur Verwendung als ein Interferometer die Schritte des Anordnens und des Ausrichtens der Maske neben dem Wellenleiter in einem Mindestabstand "d" aufweist, so dass der Gruppengeschwindigkeits-Walk-off zu einer reinen zweistrahligen Interferenz in dem Wellenleiter führt, wobei der Abstand "d" so ausgewählt ist, dass die Differenz der Ankunftszeiten der Ordnungspaare aufgrund des Gruppengeschwindigkeits-Walk-offs zu dem reinen zweistrahligen Interferenzmuster von Unterstrahlen des Lichtimpulses führt, die durch die Maske getreten sind.

9. Verfahren nach Anspruch 8, wobei die Dauer des Typ-I-Gitters ungefähr der halben Dauer der Phasenmaske entspricht, die zum Einschreiben des Gitters verwendet wird, die ungefähr der halben Dauer des Gitters entspricht, das in Schritt (c) aus Anspruch 1 eingeschrieben wird.

10. Verfahren, wobei eine Mehrzahl von Gittern in dem Wellenleiter nach Anspruch 4 unter Verwendung des Verfahrens nach Anspruch 4 ausgebildet wird.

11. Verfahren, wobei eine Mehrzahl von Gittern in mehreren Wellenleitern unter Verwendung des Verfahrens nach Anspruch 4 ausgebildet wird, und wobei die Wellenleiter verknüpft sind, um einen Sensor zu bilden.

12. Verfahren nach Anspruch 4 oder 11, wobei der mit dem wärmestabilen Bragg-Gitter assoziierte Verlust geringer ist als 1,0 dB.

## Revendications

1. Procédé de fabrication d'un réseau thermiquement stable comprenant les étapes séquentielles consistant à :
a) fournir un guide d'onde optique ayant un seuil d'intensité caractéristique ; le seuil d'intensité caractéristique étant l'intensité de la lumière nécessaire pour graver un réseau de type Il dans ledit guide d'ondes optique ;
b) abaisser le seuil d'intensité caractéristique du guide d'ondes d'au moins 25 % en chargeant à l'hydrogène ou au deutérium le guide d'ondes optique avant de graver le réseau ou en variante en pré-gravant le guide d'ondes avec un réseau de type 1 avant de graver le réseau souhaité ;
c) irradier le guide d'onde avec des impulsions femtosecondes infrarouges de lumière ayant une intensité suffisante et pendant une durée suffisante pour obtenir un réseau de type Il ayant une modulation d'indice de pic, ladite intensité des impulsions femtosecondes de lumière étant inférieure d'au moins 25 % au seuil d'intensité caractéristique requis pour graver un réseau de type II, et l'intensité et la durée étant suffisantes de sorte que 60 % de la modulation d'indice de pic de réseau subsiste après des expositions d'au moins 10 heures à une température de 1000 °C.

2. Procédé selon la revendication 1, l'intensité suffisante étant au moins 10¹¹ W/cm², et au moins 60 % du réseau subsistant après des expositions d'au moins 10 heures à une température d'au moins 1000 °C.

3. Procédé selon la revendication 2, l'intensité suffisante étant au moins 7x10¹² W/cm²_{.}

4. Procédé selon la revendication 2, le réseau étant gravé au coeur du guide d'ondes optique et le réseau étant un réseau de Bragg.

5. Procédé selon la revendication 4, le réseau ayant une différence d'indice de réfraction entre des régions à indice de réfraction élevé et faible adjacentes dans le verre d'au moins 3x10⁻³.

6. Procédé selon la revendication 4, le guide d'ondes étant une fibre optique ayant au moins une région en son sein vers le réseau qui est dopée.

7. Procédé selon la revendication 6, le réseau étant dopé avec du germanium.

8. Procédé selon la revendication 1, la pré-gravure du premier réseau de type-1 comprenant les étapes consistant à :
disposer un masque de phase à côté du guide d'ondes ; et, irradier la surface d'un masque de phase avec un rayonnement électromagnétique ayant une plage de longueur d'onde prédéterminée et ayant une durée d'impulsion inférieure ou égale à 100 picosecondes, le masque étant disposé pour permettre à une partie du rayonnement électromagnétique d'interagir avec le masque et d'être incidente sur le guide d'ondes, l'interaction du rayonnement électromagnétique avec le masque visant à produire une pluralité d'ordres diffractés supérieurs à deux, au moins l'un des ordres diffractés étant une paire, l'interaction du rayonnement électromagnétique avec le masque visant à produire un modèle de modulation d'intensité spatiale au sein du guide d'ondes, le rayonnement électromagnétique incident sur le guide d'onde étant suffisamment intense pour provoquer un changement dans un indice de réfraction du guide d'ondes, la disposition d'un masque à utiliser comme interféromètre comprenant les étapes consistant à disposer et orienter le masque à côté du guide d'ondes au moins à une distance « d » de sorte que la dispersion de vitesse de groupe se traduise en une interférence pure de deux faisceaux dans le guide d'ondes, la distance « d » étant choisie de sorte que la différence des temps d'arrivée des paires d'ordres due à la dispersion de vitesse de groupe se traduise en le modèle d'interférence pure de deux faisceaux de sous-faisceaux de ladite impulsion de lumière qui sont passés par le masque.

9. Procédé selon la revendication 8, la période du réseau de type 1 étant environ la moitié de la période du masque de phase utilisé pour inscrire le réseau qui est environ la moitié de la période du réseau gravé à l'étape (c) de la revendication 1.

10. Procédé dans lequel une pluralité de réseaux sont formés au sein du guide d'ondes de la revendication 4 à l'aide du procédé de la revendication 4.

11. Procédé dans lequel une pluralité de réseaux sont formés au sein de plusieurs guides d'ondes à l'aide du procédé de la revendication 4 et lesdits guides d'ondes étant concaténés pour former une matrice de capteurs.

12. Procédé selon la revendication 4, la perte associée au réseau de Bragg thermiquement stable étant inférieure à 1,0 dB.
